# EUROPÄISCHE PATENTSCHRIFT

(11) **EP 3 814 651 B1**
(45) Veröffentlichungstag und Bekanntmachung des Hinweises auf die Patenterteilung: **29.01.2025**
(21) Anmeldenummer: 19731585.6
(22) Anmeldetag: 03.06.2019
(51) Int. Cl.: F16F 15/12

(54) **DREHMOMENTÜBERTRAGUNGSVORRICHTUNG MIT EINEM STEUERUNGSSYSTEM ZUR ERMITTLUNG DER DREHRICHTUNG DES ROTORS**
TORQUE TRANSFER DEVICE HAVING A CONTROL SYSTEM FOR DETERMINING THE DIRECTION OF ROTATION OF THE ROTOR
DISPOSITIF DE TRANSMISSION DE COUPLE COMPRENANT UN SYSTÈME DE COMMANDE POUR LA DÉTERMINATION DU SENS DE ROTATION DU ROTOR

(30) Priorität: 26.06.2018 DE 102018115310
(43) Veröffentlichungstag der Anmeldung: 05.05.2021
(73) Patentinhaber: Schaeffler Technologies AG & Co. KG, 91074 Herzogenaurach (DE)
(72) Erfinder: HERRMANN, Johannes, 77855 Achern (DE)
(86) Internationale Anmeldenummer: PCT/DE2019/100484
(87) Internationale Veröffentlichungsnummer: WO 2020/001681

(56) Entgegenhaltungen:
- DE-A1- 102012 203 611
- DE-A1- 102014 206 330
- DE-A1- 102016 211 837
- DE-A1- 19 943 036

## Beschreibung

Die Erfindung betrifft eine Drehmomentübertragungsvorrichtung gemäß dem Oberbegriff von Anspruch 1.

Eine Drehmomentübertragungsvorrichtung umfassend einen Elektromotor mit einem Stator und einem diesem gegenüber verdrehbaren Rotor ist allgemein bekannt. Beispielsweise finden solche Drehmomentübertragungsvorrichtungen in einem Antriebsstrang eines Kraftfahrzeugs Anwendung. Ein derartiger Antriebsstrang kann Bestandteil eines Hybridantriebes sein, bei welchem zusätzlich zu dem Elektromotor ein Verbrennungsmotor eingesetzt wird.

Zur Kommutierung des Elektromotors ist es notwendig, die Drehlage des Rotors, das bedeutet die Winkelposition des Rotors zu kennen. Hierfür gibt es verschiedene Sensoren, beispielsweise magnetfeldbasierte oder optische Sensoren. Beispielsweise wird in der deutschen Patentanmeldung DE 10 2017 113 627 ein Resolver beschrieben, der es ermöglicht, eine Winkelposition des Rotors zu erkennen. Ein Resolver ist ein zusätzliches und Bauraum beanspruchendes Bauteil, welches einen erhöhten konstruktiven Aufwand mit sich bringt und zusätzliche Kosten zur Folge hat.

Aus der DE 10 2016 211 837 A1 ist ein Verfahren zur Bestimmung einer Position eines Rotors eines kommutierten Elektromotors bekannt, bei dem der Elektromotor gedreht wird und die in die drei Phasen des Elektromotors induzierte Spannung und entsprechend die Gegen-EMK gemessen wird. Anhand dieser Messung lässt sich dann die Winkelposition des Rotors feststellen. Der Rotor kann dabei von außerhalb gedreht werden oder aber sich selbst elektrisch antrieben, wobei die induzierte Spannung dann in einem nicht stromführenden Ausgang des Elektromotors gemessen wird.

Wird der Elektromotor aktiv durch einen Stromimpuls zur Drehbewegung veranlasst, kann dies eine Drehbewegung in die eine oder in die andere Drehrichtung des Rotors zur Folge haben. Bei Ankopplung des Rotors an eine Brennkraftmaschine kann eine Drehbewegung des Rotors in die falsche Richtung die Brennkraftmaschine allerdings beschädigen oder sogar zerstören.

Eine Drehmomentübertragungsvorrichtung gemäß dem Oberbegriff des Anspruchs 1 ist aus der DE 199 43 036 A1 bekannt.

Bezüglich weiteren Standes der Technik wird auf die DE 10 2014 206 330 A1 und die DE 10 2012 203 611 A1 verwiesen.

Die Aufgabe der vorliegenden Erfindung besteht darin, eine Drehmomentübertragungsvorrichtung vorzuschlagen, bei der die Gefahr einer Beschädigung oder Zerstörung der Brennkraftmaschine verringert oder verhindert wird. Weiterhin ist es eine Aufgabe der vorliegenden Erfindung, einen Sensor oder einen Resolver zur Erkennung der Drehlage des Rotors in Bezug auf den Stator einzusparen. Auch soll der Bauraumbedarf einer Drehmomentübertragungsvorrichtung verringert werden. Eine weitere Aufgabe besteht darin, eine Drehmomentübertragungsvorrichtung zu verbessern.

Wenigstens eine dieser Aufgaben wird durch eine Drehmomentübertragungsvorrichtung mit den Merkmalen nach Anspruch 1 gelöst. Entsprechend wird eine Drehmomentübertragungsvorrichtung, insbesondere in einem Antriebsstrang eines Kraftfahrzeugs, vorgeschlagen, aufweisend einen Elektromotor mit einem Stator und einem diesem gegenüber verdrehbaren Rotor, ein Steuerungssystem, das einen Stromimpuls an den Elektromotor ausgeben kann, wobei der Stromimpuls eine Drehbewegung des Rotors in eine erste Drehrichtung und um einen ersten Drehwinkel und dadurch eine induzierte Spannung bewirkt, die durch das Steuerungssystem empfangen wird und durch welche das Steuerungssystem die Drehrichtung und/oder die Drehlage des Rotors in Bezug auf den Stator ermittelt, wobei der Rotor mit einem Drehschwingungsdämpfer umfassend einen Dämpfereingang und einen Dämpferausgang verbunden ist, wobei der Dämpferausgang entgegen der Wirkung von Energiespeicherelementen gegenüber dem Dämpfereingang begrenzt verdrehbar ist und die Drehbewegung des Rotors eine Relativverdrehung zwischen Dämpfereingang und Dämpferausgang bewirken kann. Dadurch kann ein Sensor oder ein Resolver zur Erkennung der Winkelposition des Rotors in Bezug auf den Stator eingespart werden. Auch kann der Bauraumbedarf der Drehmomentübertragungsvorrichtung verringert werden, die Drehmomentübertragungsvorrichtung kann kürzer bauen und die Drehmomentübertragungsvorrichtung wird insgesamt verbessert.

Der Stromimpuls kann eine kurzzeitige, dynamische Drehbewegung des Rotors bewirken. Diese Drehbewegung kann sich hauptsächlich durch eine sich ändernde Winkelbeschleunigung auszeichnen.

Der Drehschwingungsdämpfer kann als Zweimassenschwungrad ausgestaltet sein. Der Drehschwingungsdämpfer kann in einem Ölbad, also nass, betrieben werden oder trocken laufend ausgebildet sein. Eine Fettschmierung, insbesondere der Energiespeicherelemente kann dabei vorgesehen sein. Die Energiespeicherelemente können als Federn, insbesondere als Bogenfedern, ausgeführt sein.

Das Steuerungssystem kann die Motoransteuerung zur Kommutierung des Elektromotors umfassen. Das Steuerungssystem kann den Elektromotor über drei Motorphasen ansteuern.

Die Erkennung der Drehrichtung und/oder der Drehlage des Rotors kann bei jedem Anlernvorgang der Motoransteuerung, beispielsweise bei erstmaliger Inbetriebnahme der Drehmomentübertragungsvorrichtung, nach Abschleppen des die Drehmomentübertragungsvorrichtung umfassenden Fahrzeugs oder nach Wechsel der Spannungsversorgung, insbesondere für das Steuerungssystem, notwendig sein.

Die Drehlage umfasst wenigstens die Erkennung der Winkelposition des Rotors.

Der Elektromotor wird durch wenigstens drei Motorphasen elektrisch angesteuert, wobei das Steuerungssystem den Stromimpuls über die erste Motorphase ausgibt und die induzierte Spannung über die zweite und dritte Motorphase ausliest.

In einer besonders vorteilhaften Ausführung der Erfindung ist der Rotor mit dem Dämpferausgang verbunden und die Drehbewegung des Rotors bewirkt eine Drehbewegung des Dämpferausgangs um einen zweiten Drehwinkel. Der zweite Drehwinkel kann gleich, kleiner oder grösser wie der erste Drehwinkel sein. Der Rotor kann drehfest mit dem Dämpferausgang verbunden sein.

In einer speziellen Ausgestaltung der Erfindung ist eine Kurbelwelle eines Verbrennungsmotors mit dem Dämpfereingang verbunden. Die Kurbelwelle kann drehfest mit dem Dämpfereingang verbunden sein.

In einer bevorzugten Ausführungsform der Erfindung wird der Stromimpuls bei stehendem, also nicht drehendem Verbrennungsmotor ausgegeben. Die Erkennung der Drehrichtung und/oder der Drehlage des Rotors kann bei stehendem, also nicht drehendem Verbrennungsmotor erfolgen. Bei drehendem Verbrennungsmotor kann ebenfalls eine Erkennung der Drehlage und/oder Drehrichtung des Motors erfolgen, indem über zwei Motorphasen die durch die Drehung des Rotors induzierte Spannung gemessen wird. Dies kann während des Betriebs der Drehmomentübertragungsvorrichtung erfolgen.

In einer besonders bevorzugten Ausgestaltung der Erfindung bewirkt die Drehbewegung des Rotors eine Drehbewegung des Dämpfereingangs um einen dritten Drehwinkel, der kleiner als der erste und/oder zweite Drehwinkel ist, bevorzugt Null ist. Dadurch kann eine Beschädigung oder Zerstörung der Brennkraftmaschine verhindert werden, sollte die durch den Stromimpuls angeregte Drehbewegung des Rotors und der damit verbundenen Kurbelwelle in die negative, also falsche Drehrichtung des Verbrennungsmotors erfolgen. Die Energiespeicherelemente des Drehschwingungsdämpfers sind in der Lage, die Bewegungsenergie der dynamischen Drehbewegung des Rotors aufzunehmen, als potentielle Energie zu speichern und wieder in Form von Bewegungsenergie anzugeben. Die Aufnahme und Abgabe der Bewegungsenergie erfolgt dabei bevorzugt von und an den Dämpferausgang. Eine Weiterleitung der Drehbewegung von dem Rotor an den Verbrennungsmotor kann verhindert oder verringert

In einer weiteren besonders vorteilhaften Ausführungsform der Erfindung ist der Elektromotor als Startergenerator ausgebildet und kann den Verbrennungsmotor mechanisch anwerfen.

In einer speziellen Ausführungsform der Erfindung ist der Elektromotor mit dem Drehschwingungsdämpfer über ein Getriebe verbunden.

In einer weiteren bevorzugten Ausgestaltung der Erfindung kann der Verbrennungsmotor ein Drehmoment über eine KO-Kupplung an eine Abtriebsseite übertragen und/oder ein Drehmoment an den Elektromotor übertragen.

In einer speziellen Ausgestaltung der Erfindung ist ein zweiter Elektromotor zur Drehmomentübertragung an die Abtriebsseite, beispielsweise Fahrzeugrädern, vorgesehen. Der Elektromotor kann als Generator und als Starter ausgebildet und der zweite Elektromotor als Antriebselement zur Fortbewegung des Fahrzeugs dienen.

Der Verbrennungsmotor kann dem Elektromotor mechanische Energie bereitstellen, die der Elektromotor in elektrische Energie umsetzen kann. Diese elektrische Energie kann zur Versorgung einer Batterie und/oder des zweiten Elektromotors vorgesehen sein. Im letzteren Fall handelt es sich um einen seriellen Hybridantriebsstrang.

Der Verbrennungsmotor kann seine mechanische Energie zur Fortbewegung des Fahrzeugs ausschließlich dem Elektromotor oder wahlweise alternativ oder zusätzlich mechanisch einer Abtriebsseite, beispielsweise Fahrzeugrädern, bereitstellen. Dieser Aufbau entspricht einem seriellen leistungsverzweigten Hybridantriebsstrang.

Weitere Vorteile und vorteilhafte Ausgestaltungen der Erfindung ergeben sich aus der Figurenbeschreibung und den Abbildungen.

### Figurenbeschreibung

Die Erfindung wird im Folgenden unter Bezugnahme auf die Abbildung ausführlich beschrieben. Es zeigt:

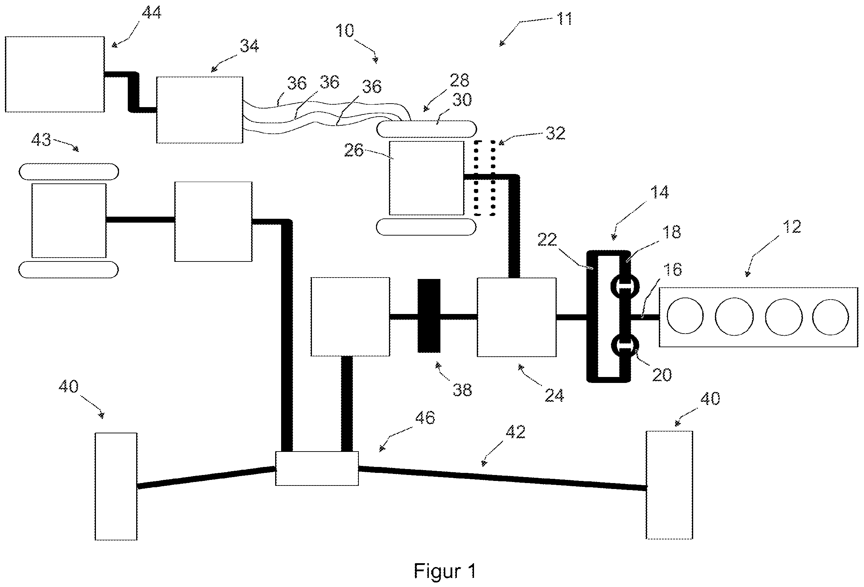

- Figur 1:: Eine Drehmomentübertragungsvorrichtung in einer speziellen Ausführung der Erfindung.

Figur 1 zeigt eine Drehmomentübertragungsvorrichtung 10 in einer speziellen Ausführungsform der Erfindung. Die Drehmomentübertragungsvorrichtung 10 ist Teil eines Antriebsstrangs 11, insbesondere eines Hybridantriebsstrangs eines Kraftfahrzeugs.

Der Antriebsstrang 11 umfasst einen Verbrennungsmotor 12 zur Bereitstellung mechanischer Energie, der mit einem Drehschwingungsdämpfer 14 verbunden ist. Eine Kurbelwelle 16 des Verbrennungsmotors 12 ist hierfür mit einem Dämpfereingang 18 des Drehschwingungsdämpfers 14 drehfest verbunden. Der Dämpfereingang 18 ist entgegen der Wirkung von Energiespeicherelementen 20 gegenüber einem Dämpferausgang 22 begrenzt verdrehbar. Der Dämpferausgang 22 ist über ein Getriebe 24 mit einem Rotor 26 eines Elektromotors 28 verbunden.

Der Elektromotor 28 umfasst weiterhin einen Stator 30, gegenüber welchem der Rotor 26 eine bestimmte Drehlage, das bedeutet eine bestimmte Winkelposition, aufweist. Diese Drehlage ist entscheidend für die Festlegung der Kommutierung des Elektromotors 28. Es ist daher entscheidend, sowohl die Drehrichtung des Elektromotors 28 als auch dessen Drehlage in Bezug auf den Stator 30 zu erfassen, um die Kommutierung des Elektromotors 28 entsprechend einstellen zu können.

Üblicherweise erfolgt die Erkennung der Drehlage des Rotors 26 über Sensoren oder über einen hier gedachten, gestrichelt eingezeichneten und nicht benötigten Resolver 32. Entsprechend der vorliegenden Erfindung wird durch ein den Elektromotor 28 über Motorphasen 36 ansteuerndes Steuerungssystem 34 ein Stromimpuls an den Elektromotor 28 ausgegeben, wobei der Stromimpuls eine Drehbewegung des Rotors 26 in eine erste Drehrichtung und um einen ersten Drehwinkel und dadurch eine induzierte Spannung bewirkt, die durch das Steuerungssystem 34 wiederum empfangen werden kann. Dadurch wird es dem Steuerungssystem 34 ermöglicht, die Drehrichtung und/oder die Drehlage des Rotors 26 in Bezug auf den Stator 30 zu ermitteln.

Der Elektromotor 28 ist als Generator und/oder Starter zum Anwerfen des Verbrennungsmotors 12 ausgebildet. Hierfür besteht zwischen dem Rotor 26 des Elektromotors 28 und der Kurbelwelle 16 des Verbrennungsmotors 12 eine mechanische Verbindung. Eine gleichförmige Drehbewegung des Rotors 26 bewirkt somit eine gleichförmige Drehbewegung der Kurbelwelle 16 des Verbrennungsmotors 12.

Sollte sich der Rotor 26 des Elektromotors 28 in eine negative, das bedeutet in Bezug auf den Verbrennungsmotor 12 in eine falsche Drehrichtung drehen, so kann dies die Zerstörung des Verbrennungsmotors 12 herbeiführen. Zur Erkennung der Drehrichtung und/oder der Drehlage des Rotors 26 wird durch das Steuerungssystem 34 ein Stromimpuls auf eine Motorphase 36 gegeben, wodurch der Rotor 26 eine Drehbewegung um einen ersten Drehwinkel ausführt. Diese Drehbewegung um den ersten Drehwinkel wird an den Dämpferausgang 22 übertragen, der sich dadurch um einen zweiten Drehwinkel, der gleich dem ersten Drehwinkel sein kann, verdreht.

Durch die Wirkung der Energiespeicherelemente 20 als mechanische Pufferelemente, wird eine Weiterleitung der dynamischen Drehbewegung von dem Dämpferausgang 22 an den Dämpfereingang 18 verhindert. Sollte sich der Rotor 26 somit in eine falsche Drehrichtung in Bezug auf den Verbrennungsmotor 12 drehen, so wird die durch den Stromimpuls bewirkte Drehbewegung durch die Energiespeicherelemente 20 aufgefangen und vorteilhafterweise nicht an die Kurbelwelle 16 weitergeleitet. Dadurch kann verhindert werden, dass der Verbrennungsmotor 12 im Fall der durch das Steuerungssystem 34 veranlassten Drehbewegung des Rotors 26 beschädigt oder zerstört wird.

Der Verbrennungsmotor 12 kann ein Drehmoment über eine KO-Kupplung 38 an eine Abtriebsseite 46, beispielsweise an eine Fahrzeugräder 40 antreibende Fahrzeugachse 42 übertragen. Bei geöffneter KO-Kupplung erfolgt die Übertragung des Drehmoments von dem Verbrennungsmotor 12 ausschließlich an den Elektromotor 28. Der Elektromotor 28 kann einen zweiten Elektromotor 43 und/oder eine Batterie 44 mit elektrischer Energie versorgen. Es handelt sich hierbei um einen seriellen Hybridantriebstrang, wenn der Elektromotor 28 zur elektrischen Versorgung des zweiten Elektromotors 43, der den Antrieb der Fahrzeugachse 42 bewirkt, vorgesehen ist.

Der Verbrennungsmotor 12 kann seine mechanische Energie zur Fortbewegung des Fahrzeugs ausschließlich dem Elektromotor 28 oder wahlweise alternativ oder zusätzlich mechanisch der Abtriebsseite 46, beispielsweise der Fahrzeugachse 42, bereitstellen. Dieser Aufbau entspricht einem seriellen leistungsverzweigten Hybridantriebsstrang. Das zur Fortbewegung des Fahrzeugs erforderliche Drehmoment kann entweder ausschließlich über den zweiten Elektromotor 43 oder ausschließlich über den Verbrennungsmotor 12 oder anteilig von beiden bereitgestellt werden.

### Bezugszeichenliste

- 10: Drehmomentübertragungsvorrichtung
- 11: Antriebsstrang
- 12: Verbrennungsmotor
- 14: Drehschwingungsdämpfer
- 16: Kurbelwelle
- 18: Dämpfereingang
- 20: Energiespeicherelemente
- 22: Dämpferausgang
- 24: Getriebe
- 26: Rotor
- 28: Elektromotor
- 30: Stator
- 32: Resolver
- 34: Steuerungssystem
- 36: Motorphase
- 38: KO-Kupplung
- 40: Fahrzeugrad
- 42: Fahrzeugachse
- 43: Elektromotor
- 44: Batterie
- 46: Abtriebsseite

## Patentansprüche

1. Drehmomentübertragungsvorrichtung (10), insbesondere in einem Antriebsstrang (11) eines Kraftfahrzeugs, wobei die Drehmomentübertragungsvorrichtung (10) aufweist:
einen durch wenigstens drei Motorphasen (36) elektrisch ansteuerbaren Elektromotor (28) mit einem Stator (30) und einem diesem gegenüber verdrehbaren Rotor (26),
ein Steuerungssystem (34), das einen eine Drehbewegung des Rotors (26) in eine erste Drehrichtung und um einen ersten Drehwinkel und dadurch eine induzierte Spannung bewirkenden Stromimpuls an den Elektromotor (28) ausgibt, und
einen Drehschwingungsdämpfer (14) mit einem Dämpfereingang (18) und einem Dämpferausgang (22), wobei
der Rotor (26) mit dem Drehschwingungsdämpfer (14) verbunden ist,
der Dämpferausgang (22) entgegen der Wirkung von Energiespeicherelementen (20) gegenüber dem Dämpfereingang (18) begrenzt verdrehbar ist und
die Drehbewegung des Rotors (26) eine Relativverdrehung zwischen Dämpfereingang (18) und Dämpferausgang (22) bewirkt,
**dadurch gekennzeichnet, dass**
die induzierte Spannung durch das Steuerungssystem (34) empfangen wird und das Steuerungssystem (34) durch die induzierte Spannung eine Drehrichtung und/oder eine Drehlage des Rotors (26) in Bezug auf den Stator (30) ermittelt, und
das Steuerungssystem (34) den Stromimpuls über eine erste Motorphase (36) ausgibt und die induzierte Spannung über eine zweite und eine dritte Motorphase (36) ausliest, so dass die Motoransteuerung zur Kommutierung des Elektromotors sensorlos erfolgt.

2. Drehmomentübertragungsvorrichtung (10) nach Anspruch 1, **dadurch gekennzeichnet, dass** der Rotor (26) mit dem Dämpferausgang (22) verbunden ist und die Drehbewegung des Rotors (26) eine Drehbewegung des Dämpferausgangs (22) um einen zweiten Drehwinkel bewirkt.

3. Drehmomentübertragungsvorrichtung (10) nach Anspruch 2, **dadurch gekennzeichnet, dass** die Drehbewegung des Rotors (26) eine Drehbewegung des Dämpfereingangs (18) um einen dritten Drehwinkel bewirkt, der kleiner als der erste und/oder zweite Drehwinkel ist, bevorzugt Null ist.

4. Drehmomentübertragungsvorrichtung (10) nach einem der Ansprüche 1 bis 3, **dadurch gekennzeichnet, dass** eine Kurbelwelle (16) eines Verbrennungsmotors (12) mit dem Dämpfereingang (18) verbunden ist.

5. Drehmomentübertragungsvorrichtung (10) nach Anspruch 4, **dadurch gekennzeichnet, dass** der Stromimpuls bei stehendem, also nicht drehendem Verbrennungsmotor (12) ausgegeben wird.

6. Drehmomentübertragungsvorrichtung (10) nach Anspruch 4 oder 5, **dadurch gekennzeichnet, dass** der Elektromotor (28) als ein Startergenerator ausgebildet ist und den Verbrennungsmotor (12) mechanisch anwirft.

7. Drehmomentübertragungsvorrichtung (10) nach einem der Ansprüche 4 bis 6, **dadurch gekennzeichnet, dass** der Verbrennungsmotor (12) ein Drehmoment über eine KO-Kupplung (38) an eine Abtriebsseite (46) und/oder ein Drehmoment an den Elektromotor (28) überträgt.

8. Drehmomentübertragungsvorrichtung (10) nach einem der Ansprüche 1 bis 7, **dadurch gekennzeichnet, dass** der Elektromotor (28) mit dem Drehschwingungsdämpfer (14) über ein Getriebe (24) verbunden ist.

9. Drehmomentübertragungsvorrichtung (10) nach einem der Ansprüche 1 bis 9, **dadurch gekennzeichnet, dass** ein zweiter Elektromotor (43) zur Drehmomentübertragung an die Abtriebsseite (46) vorgesehen ist.

## Claims

1. A torque transfer device (10), in particular in a drive train (11) of a motor vehicle, wherein the torque transfer device (10) has:
an electric motor (28), which can be electrically controlled by at least three motor phases (36) and has a stator (30) and a rotor (26) which can be rotated relative to the stator,
a control system (34), which outputs a current pulse to the electric motor (28), which causes a rotary motion of the rotor (26) in a first direction of rotation and through a first angle of rotation and thus induces an induced voltage, and
a torsional vibration damper (14) having a damper input (18) and a damper output (22), wherein the rotor (26) is connected to the torsional vibration damper (14),
the damper output (22) can be rotated to a limited extent against the effect of energy storage elements (20) relative to the damper input (18), and
the rotary motion of the rotor (26) causes a relative rotation between the damper input (18) and the damper output (22),
**characterised in that**
the induced voltage is received by the control system (34) and the control system (34) determines a direction of rotation and/or a rotational position of the rotor (26) with respect to the stator (30) by means of the induced voltage, and
the control system (34) outputs the current pulse via a first motor phase (36) and reads out the induced voltage via a second and a third motor phase (36), such that the motor control for commutation of the electric motor is carried out without sensors.

2. The torque transmission device (10) according to claim 1, **characterised in that** the rotor (26) is connected to the damper output (22) and the rotary motion of the rotor (26) causes a rotary motion of the damper output (22) through a second angle of rotation.

3. The torque transmission device (10) according to claim 2, **characterised in that** the rotary motion of the rotor (26) causes a rotary motion of the damper input (18) through a third angle of rotation that is smaller than the first and/or second angle of rotation, preferably zero.

4. The torque transmission device (10) according to any one of claims 1 to 3, **characterised in that** a crankshaft (16) of an internal combustion engine (12) is connected to the damper input (18).

5. The torque transmission device (10) according to claim 4, **characterised in that** the current pulse is output when the internal combustion engine (12) is stationary, i.e. not rotating.

6. The torque transmission device (10) according to claim 4 or 5, **characterised in that** the electric motor (28) is designed as a starter generator and starts the internal combustion engine (12) mechanically.

7. The torque transmission device (10) according to any one of claims 4 to 6, **characterised in that** the internal combustion engine (12) transmits a torque via a K0 clutch (38) to an output side (46) and/or a torque to the electric motor (28).

8. The torque transmission device (10) according to any one of claims 1 to 7, **characterised in that** the electric motor (28) is connected to the torsional vibration damper (14) via a transmission (24).

9. The torque transmission device (10) according to any one of claims 1 to 9, **characterised in that** a second electric motor (43) is provided for transmitting torque to the output side (46).

## Revendications

1. Dispositif de transmission de couple (10), en particulier dans une chaîne cinématique (11) d'un véhicule automobile, le dispositif de transmission de couple (10) présentant :
un moteur électrique (28) qui peut être commandé électriquement par au moins trois phases de moteur (36) et qui comporte un stator (30) et un rotor (26) qui peut être entraîné en rotation par rapport à ce dernier,
un système de commande (34) qui délivre une impulsion de courant au moteur électrique (28) qui provoque un mouvement de rotation du rotor (26) dans un premier sens de rotation et selon un premier angle de rotation et ainsi une tension induite, et
un amortisseur de vibrations de torsion (14) comportant une entrée d'amortisseur (18) et une sortie d'amortisseur (22), dans lequel
le rotor (26) est relié à l'amortisseur de vibrations de torsion (14),
la sortie d'amortisseur (22) peut être entraînée en rotation dans une mesure limitée par rapport à l'entrée d'amortisseur (18) contre l'effet d'éléments d'accumulation d'énergie (20) et
le mouvement de rotation du rotor (26) provoque une rotation relative entre l'entrée amortisseur (18) et la sortie amortisseur (22),
**caractérisé en ce que**
la tension induite est reçue par le système de commande (34) et le système de commande (34) détermine par le biais de la tension induite un sens de rotation et/ou une position de rotation du rotor (26) par rapport au stator (30), et
le système de commande (34) délivre l'impulsion de courant par l'intermédiaire d'une première phase de moteur (36) et lit la tension induite par l'intermédiaire d'une deuxième et une troisième phase de moteur (36), de sorte que la commande de moteur pour la commutation du moteur électrique s'effectue sans capteurs.

2. Dispositif de transmission de couple (10) selon la revendication 1, **caractérisé en ce que** le rotor (26) est relié à la sortie d'amortisseur (22) et le mouvement de rotation du rotor (26) provoque un mouvement de rotation de la sortie d'amortisseur (22) selon un deuxième angle de rotation.

3. Dispositif de transmission de couple (10) selon la revendication 2, **caractérisé en ce que** le mouvement de rotation du rotor (26) provoque un mouvement de rotation de l'entrée d'amortisseur (18) selon un troisième angle de rotation qui est inférieur au premier et/ou au deuxième angle de rotation, de préférence nul.

4. Dispositif de transmission de couple (10) selon l'une quelconque des revendications 1 à 3, **caractérisé en ce qu'**un vilebrequin (16) d'un moteur à combustion interne (12) est relié à l'entrée d'amortisseur (18).

5. Dispositif de transmission de couple (10) selon la revendication 4, **caractérisé en ce que** l'impulsion de courant est délivrée lorsque le moteur à combustion interne (12) est à l'arrêt, c'est-à-dire ne tourne pas.

6. Dispositif de transmission de couple (10) selon la revendication 4 ou 5, **caractérisé en ce que** le moteur électrique (28) est conçu comme démarreur-générateur et démarre mécaniquement le moteur à combustion interne (12).

7. Dispositif de transmission de couple (10) selon l'une des revendications 4 à 6, **caractérisé en ce que** le moteur à combustion interne (12) transmet un couple par l'intermédiaire d'un embrayage K0 (38) à un côté sortie (46) et/ou un couple au moteur électrique (28).

8. Dispositif de transmission de couple (10) selon l'une quelconque des revendications 1 à 7, **caractérisé en ce que** le moteur électrique (28) est relié à l'amortisseur de vibrations de torsion (14) par l'intermédiaire d'une boîte de vitesses (24).

9. Dispositif de transmission de couple (10) selon l'une quelconque des revendications 1 à 9, **caractérisé en ce qu'**un second moteur électrique (43) sert à la transmission de couple au côté sortie (46).
